# FASCICULE DE BREVET EUROPEEN

(11) **EP 1 175 821 B1**
(45) Date de publication et mention de la délivrance du brevet: **21.07.2004**
(21) Numéro de dépôt: 01402058.0
(22) Date de dépôt: 30.07.2001
(51) Int. Cl.: A01D 34/68

(54) **Tondeuse à moteur pour gazon équipée d'un dispositif d'entraînement en rotation d'une lame de coupe**
Motorrasenmäher mit Drehantriebsvorrichtung für einen Schneidmesser
Motorised lawn-mower with rotational driving means for a cutting blade

(30) Priorité: 28.07.2000 FR 0009938
(43) Date de publication de la demande: 30.01.2002
(73) Titulaire: Société d'Applications de Mécaniques Agricoles (SAMAG) S.A., 37300 Joue les Tours (FR)
(72) Inventeur: Zimmermann, Roland, 37170 Chambray les Tours (FR); Hilsmann, Matthias, 37270 Montlouis (FR)
(74) Mandataire: Lerner, François

(56) Documents cités:
- DE-A- 2 735 491
- FR-A- 2 700 098
- US-A- 3 056 249
- US-A- 3 943 785
- US-A- 4 015 407
- US-A- 4 186 545
- US-A- 4 213 288
- US-A- 4 307 558

## Description

L'invention a pour objet une tondeuse à moteur pour gazon équipée d'un dispositif d'entraînement en rotation d'une lame de coupe.

L'invention concerne de façon plus précise un perfectionnement aux tondeuses à gazon équipées d'un tel dispositif, en particulier les tondeuses à main à éjection arrière de l'herbe coupée. Ce type de tondeuses doit d'une part être compacte pour en faciliter l'utilisation et nécessite d'autre part de ne laisser qu'un faible espace entre la lame de coupe et le châssis porteur, notamment le carter pour obtenir une ventilation et donc un ramassage efficace de l'herbe.

Dans le brevet antérieur France n° 93/00060 (FR-A-2 700 098) ayant pour titre « dispositif d'embrayage -- frein de lame de coupe pour tondeuse à gazon » a déjà été décrit une tondeuse à moteur à gazon équipée d'un dispositif d'entraînement en rotation d'une lame de coupe comprenant :
- un élément moteur solidaire en rotation de l'arbre de sortie du moteur et pivotant suivant une premier axe de rotation,
- des moyens de liaison pour maintenir le moteur par rapport au châssis porteur de la tondeuse,
- un élément récepteur solidaire en rotation de la lame de coupe de la tondeuse,
- des moyens de guidage en rotation pour faire tourner l'élément récepteur suivant un deuxième axe de rotation sensiblement coaxial au premier, et
- des moyens d'accouplement élastique entre l'élément moteur et l'élément récepteur.

Face à cet art antérieur, l'invention vise à réduire le bruit et les vibrations lors du fonctionnement de la tondeuse.

Pour ce faire, conformément à l'invention :
- les moyens de liaison maintenant le moteur par rapport au châssis porteur comprennent un élément élastique, de sorte que le moteur soit fixé flottant sur le châssis porteur, et
- les moyens de guidage en rotation lient mécaniquement l'élément récepteur au châssis porteur, de telle sorte que l'élément récepteur ne soit pas porté par l'arbre de sortie du moteur.

Ainsi, on supprime toute liaison mécanique "rigide", qu'elle soit directe ou indirecte entre le vilebrequin ou l'arbre de sortie du moteur et le châssis porteur. La suppression de la liaison directe est obtenue grâce à l'élément élastique interposé entre le moteur et le châssis porteur qui assure une liaison souple entre le moteur et le châssis porteur.

Pour ce qui est de l'absence de liaison indirecte, du fait des moyens de guidage en rotation, l'élément récepteur est porté par le châssis porteur et non pas par l'arbre de rotation du moteur comme dans FR-A-2 700 098. Ainsi, la liaison "rigide" entre l'arbre de sortie du moteur et l'élément récepteur peut être supprimée.

Les moyens d'accouplement élastique absorbent ou du moins ne transmettent qu'une partie fortement atténuée des vibrations entre l'élément moteur et l'élément récepteur, contrairement à des roulements interposés entre l'élément récepteur et l'arbre de rotation du moteur comme dans la solution décrite dans FR-A-2 700 098 qui lient rigidement ces deux éléments. La présente invention réduit par conséquent notablement les vibrations et le bruit de la tondeuse.

Par ailleurs, il sera noté que les mouvements du moteur par rapport au châssis porteur n'ont pas de répercussion sur la position de la lame par rapport au châssis porteur, ce qui permet d'éviter tant une collision éventuelle entre la lame de coupe et le châssis porteur, que des irrégularités dans la tonte ou une perte d'efficacité du ramassage.

L'invention propose en outre selon une caractéristique avantageuse complémentaire que :
- l'élément moteur comprenne une première demi-poulie montée solidaire en rotation de l'arbre de sortie du moteur,
- l'élément récepteur comprenne une deuxième demi-poulie juxtaposée à la première, lui faisant face et formant avec elle un profil usuel de poulie,
- les moyens d'accouplement élastique comprennent un galet et une courroie d'entraînement à profil conjugué de celui de ladite poulie constituée par les deux demi-poulies juxtaposées, ladite courroie d'entraînement étant montée dans la gorge de ladite poulie et sur le galet.

Cette solution est relativement simple.

Elle permet en outre de pouvoir embrayer/débrayer aisément la lame de coupe. Pour ce faire, l'invention propose avantageusement que la tondeuse comprenne un mécanisme pour déplacer le galet, afin de tendre ou non la courroie d'entraînement, de sorte que le galet définissant un galet tendeur permette de débrayer/d'embrayer la courroie d'entraînement, ladite courroie d'entraînement définissant une courroie d'embrayage.

Toutefois, cette solution n'est pas complètement satisfaisante. En effet, la poulie formée par les deux demi-poulies n'a pas un profil constant du fait de la mobilité du moteur par rapport au châssis porteur.

Pour résoudre cet inconvénient, l'invention propose une variante présentant les caractéristiques suivantes :
- l'élément moteur comprend une première poulie présentant une gorge,
- l'élément récepteur comprend une deuxième poulie présentant une gorge,
- les moyens d'accouplement comprennent :
   - un galet double présentant une première et une deuxième gorge,
   - une première courroie d'entraînement à profil conjugué de celui de la première poulie et de la première gorge du galet double, la première courroie d'entraînement étant montée dans la gorge de la première poulie et dans la première gorge du galet double,
   - une deuxième courroie d'entraînement à profil conjugué de celui de la deuxième poulie et de la deuxième gorge du galet double, la deuxième courroie d'entraînement étant montée dans la gorge de la deuxième poulie et dans la deuxième gorge du galet double.

Cette variante présente l'avantage de procurer un meilleur rendement dans la transmission de la puissance du moteur vers l'élément récepteur.

Afin de permettre, comme dans la réalisation précédente d'embrayer/de débrayer la lame, l'invention propose que la tondeuse comprenne en outre un galet tendeur et un mécanisme pour déplacer ledit galet tendeur afin de tendre ou non une et une seule desdites première et deuxième courroie définissant une courroie d'embrayage, de sorte que le galet permette de débrayer/d'embrayer ladite courroie d'embrayage.

Selon une autre caractéristique de l'invention, ledit galet tendeur est monté sur une pièce coudée articulée vers son milieu et portant à une de ses extrémités l'axe de rotation du galet tendeur, cette pièce coudée pouvant être commandée en rapprochement et en éloignement des éléments moteur et récepteur pour l'embrayage et le débrayage de la courroie d'embrayage, et ladite pièce coudée portant sur son bras entre son point d'articulation et l'axe de rotation du galet tendeur, un patin de frein qui vient freiner contre l'élément récepteur en position de débrayage dudit mécanisme et qui en est éloigné en position d'embrayage.

Selon une caractéristique complémentaire avantageuse, ladite pièce coudée est commandée, à son extrémité opposée à celle portant ledit galet tendeur, par un câble ou analogue agissant à l'encontre d'un ressort de rappel assurant le débrayage lorsque le câble est relâché et simultanément le freinage de l'élément récepteur et l'arrêt de la lame.

L'invention propose en outre une autre variante présentant les caractéristiques suivantes :
- les moyens d'accouplement élastique comprennent un joint de transmission élastique,
- l'élément moteur comprend des moyens de liaison entre l'arbre de sortie du moteur et le joint de transmission élastique,
- l'élément récepteur comprend un moyeu et des moyens de liaison entre le joint de transmission élastique et ledit moyeu.

Cette solution est simple, compacte et robuste, mais elle présente l'inconvénient de ne pas permettre de débrayer la lame et le coût des moyens d'accouplement élastique sont relativement onéreux, bien qu'ils soient relativement courants.

L'invention et sa mise en oeuvre apparaîtront plus clairement à l'aide de la description qui va suivre, faite en référence aux dessins annexés, dans lesquels :
- la figure 1 est une vue en coupe verticale de la partie de la tondeuse comprenant la lame de coupe et son dispositif d'entraînement avec embrayage et frein de lame, le moteur étant seulement schématisé, monté au-dessus ;
- la figure 2 est une vue en perspective faite dans la direction de la flèche II de la figure 1, montrant de façon plus spécifique les positions relatives de la poulie formée des deux demi-poulies supérieure et inférieure et du galet tendeur de courroie formant embrayage, la figure 1 étant une vue en coupe faite selon la ligne I-I de la figure 2,
- la figure 3 est une vue en coupe conformément à la figure 1 d'une première variante de réalisation,
- la figure 4 est une en coupe conformément à la figure 1 d'une deuxième variante de réalisation,
- la figure 5 est une en coupe conformément à la figure 1 d'une troisième variante de réalisation.

En se reportant aux dessins, on a illustré schématiquement le bloc moteur 1 de la tondeuse dont on aperçoit l'arbre de sortie 2 du vilebrequin. Sur l'arbre 2 est montée une demi-poulie 3 clavetée sur l'arbre 2 au moyen de la clavette 4 ; la demi-poulie 3 tourne donc avec l'arbre 2 du moteur.

Sous la demi-poulie 3 est montée une seconde demi-poulie 5 qui tourne autour d'un axe sensiblement coaxial à l'axe yy'de l'arbre 2.

Les deux demi-poulies supérieure et inférieure forment entre elles une poulie 6 présentant une gorge 21 de section classique, avantageusement trapézoïdale dans laquelle pourra s'engager une courroie 7 de section trapézoïdale conjuguée.

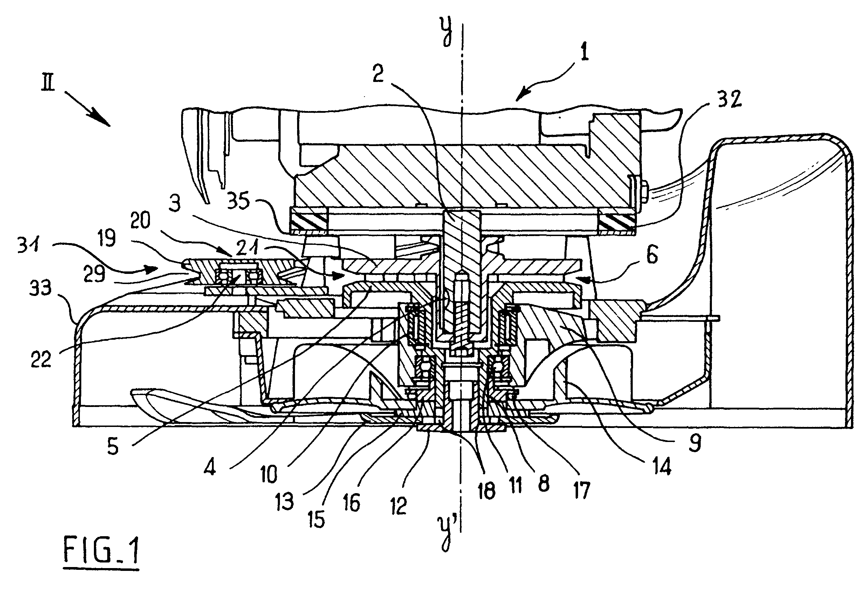

Comme on le voit plus clairement à la figure 1, la demi-poulie inférieure 5 vient de matière avec un moyeu 8 centré sur un palier 9 de lame, dans l'exemple illustré par l'intermédiaire d'un roulement à aiguilles 10 et d'un roulement à billes 11, cette demi-poulie inférieure 5 n'ayant ainsi aucune liaison mécanique avec la demi-poulie supérieure 3.

Le palier de lame 9 est quant à lui solidaire du châssis porteur de la tondeuse, par exemple du carter usuel 33 de la tondeuse.

La lame de coupe 13, avec au-dessus d'elle la turbine de soufflage d'air 14, calée entre les entretoises d'appui 15 et 16, le joint torique 17 et deux rondelles de friction 18, est fixée au moyeu 9 par l'écrou de lame 12.

En outre, un mécanisme 31 permet l'embrayage/ débrayage et freinage de la lame de coupe 13. Ce mécanisme comprend notamment un galet tendeur 19, avec son palier 20, un levier de manoeuvre 23, un câble 26, un ressort de rappel 28 et un patin de frein 30.

La courroie 7 passe également sur le galet tendeur 19 monté tournant librement autour du palier 20, tel qu'un roulement à billes dont l'axe est monté par une vis 22 à une extrémité d'une pièce coudée, formant le levier 23 de manoeuvre pour l'embrayage/ débrayage du galet 19.

Le levier 23 est articulé en son milieu 24. À son extrémité 25, opposée à celle qui porte le galet d'embrayage 19, la pièce 23 formant levier peut être tirée dans le sens de la flèche F par le câble 26 dont l'extrémité est articulée sur un axe arrêt de câble 27.

Le ressort de rappel 28 tend à ramener le levier 23 dans le sens inverse comme montré par la flèche G, c'est-à-dire en position débrayée du système.

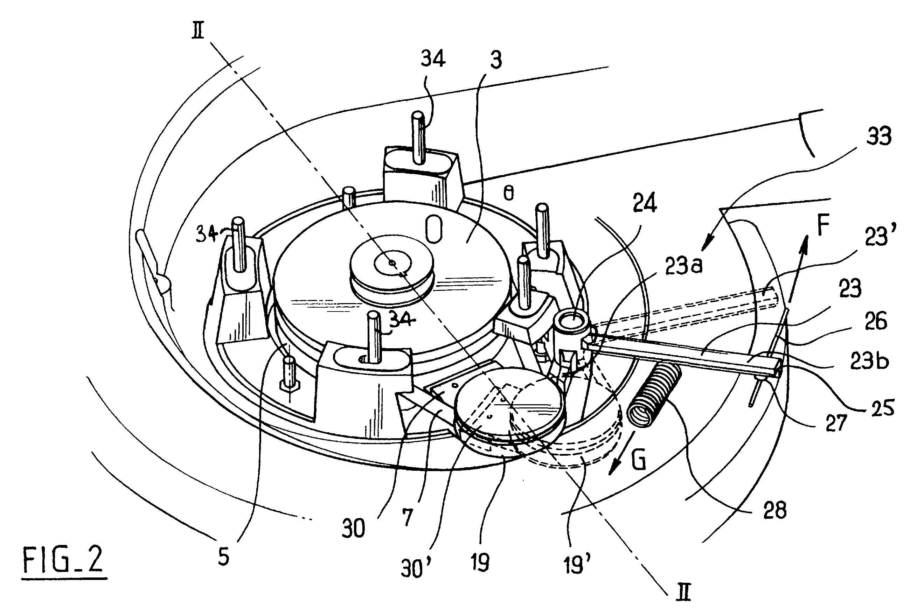

Dans la position embrayée du système, le galet 19 est déplacé dans la position schématisée en 19', le levier 23 ayant tourné en 23' (voir figure 2).

Dans cette dernière position et comme on l'aperçoit clairement à la figure 1, le galet 19 tend la courroie 7 sur sa gorge 29 et sur la gorge 21 de la poulie 6 formée des deux demi-poulies 3 et 5.

Dans cette position, la courroie trapézoïdale 7 vient en contact avec les deux demi-poulies 3 et 5, qui de ce fait sont embrayées l'une sur l'autre.

Comme on l'aperçoit plus clairement à la figure 2, dans la position débrayée du système, c'est-à-dire lorsque la courroie 7 n'est pas tendue et que le câble 26 est relâché, le ressort de rappel 28 assurant le débrayage du mécanisme, le patin de frein 30 vient porter contre la demi-poulie inférieure 5 pour la freiner et la bloquer. Au contraire, lorsque le mécanisme est embrayé, c'est-à-dire lorsque le bras 23a du levier 23 avec le galet d'embrayage 19 qu'il porte est reculé par rapport aux demi-poulies 3 et 5, le patin de frein 30 est dégagé en 30' et la demi-poulie 5 peut tourner librement.

Le fonctionnement du dispositif résulte clairement de la description qui précède.

En position relâchée du câble 26, le ressort 28 rappelle le bras 23b du levier 23 de façon à le faire tourner dans le même sens que la flèche G, débrayant le système en rapprochant le galet tendeur 19 des demi-poulies 3 et 5 et détendant la courroie 7. Simultanément, le patin 30 monté sur le bras 23a est rapproché de la demi-poulie 5 sur laquelle il y vient porter en la freinant.

Au contraire, lorsque le câble 26 d'embrayage est actionné, le bras 23b du levier 23 est entraîné dans le sens de la flèche F (embrayage), et le galet d'embrayage 19 est éloigné vers la position 19', ce qui assure la mise sous tension de la courroie 7 et simultanément l'éloignement du patin de frein 30 monté sur le bras 23a du levier 23 de la demi-poulie 1.

Dans la position embrayée, le patin de frein 30 est dégagé en 30' de la demi-poulie 5, et la courroie 10 est tendue sur la poulie 6 formée des deux demi-poulies 3,5 et sur le galet tendeur 19 qui est venu dans la position 19'.

Dans cette position, la demi-poulie supérieure 3 est solidaire en rotation de la demi-poulie inférieure 5, assurant l'entraînement direct de la lame de coupe de la tondeuse par son moteur 2. Ce dernier quant à lui est monté flottant sur une plaque support 35 fixée au carter 33 de la tondeuse par l'intermédiaire de goujons 34. En effet, un bloc élastomère 32, formant silentbloc est interposé entre le moteur 2 et la plaque support 35. De préférence, ce bloc élastomère aura une épaisseur comprise entre 10 et 40 millimètres, avantageusement sensiblement égale à 25 millimètres.

On pourrait prévoir d'autres systèmes élastiques, en remplacement du bloc élastomère 32, notamment des ressorts.

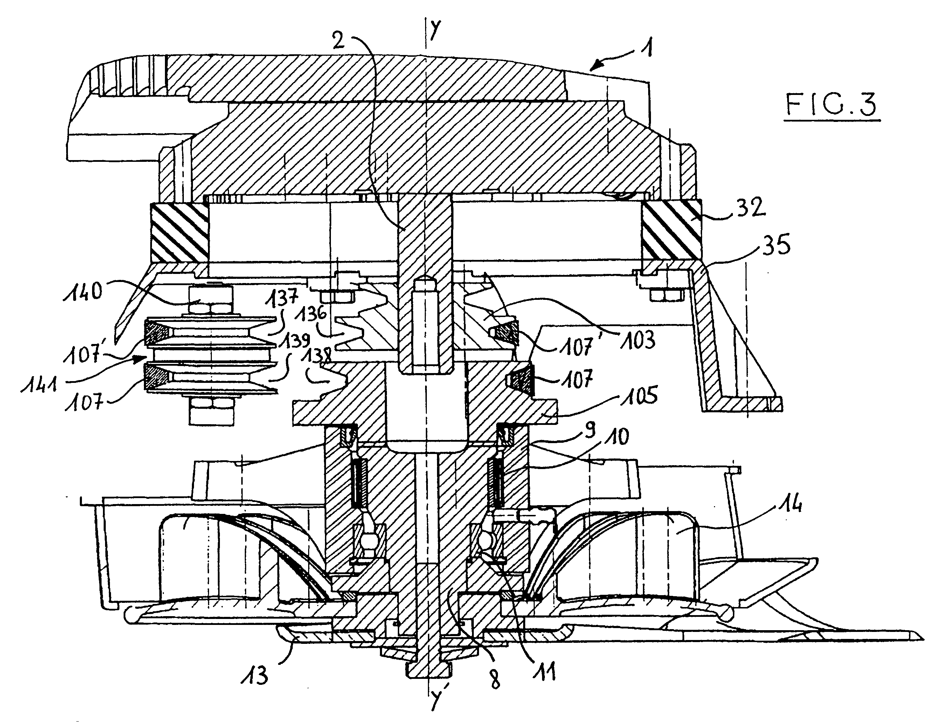

La figure 3 illustre une première variante de réalisation. Les éléments inchangés portent à la figure 3 le même repère qu'aux figures précédentes, tandis que les éléments modifiés portent un repère augmenté de 100.

Cette première variante de tondeuse se distingue de la solution décrite précédemment en ce que la demi-poulie 3 et la demi-poulie 5 ont été remplacées par des poulies 103 et 105 présentant chacune une gorge, respectivement 136 et 138, de section sensiblement trapézoïdale. Ces poulies 103 et 105 sont fixées, comme décrit précédemment en relation avec les demi-poulies 103 et 105, respectivement sur l'axe 2 et sur le moyeu 8.

En outre, cette première variante comprend un galet double 141 mobile en rotation autour d'un axe 140 fixé au carter 33 par l'intermédiaire de la plaque support 35. Le galet double 141 comprend deux gorges 137 et 139.

Enfin, cette première variante comprend une courroie 107' passant dans la gorge 136 de la poulie 103 et la gorge 137 du galet double 141, ainsi qu'une courroie 107 passant dans la gorge 139 du galet double 141 et dans la gorge 138 de la poulie 105.

Cette première variante est dépourvue de mécanisme d'embrayage/ débrayage et frein de lame tel que celui repéré 31 à la figure 1, de sorte que les courroies 107 et 107' sont en permanence tendues.

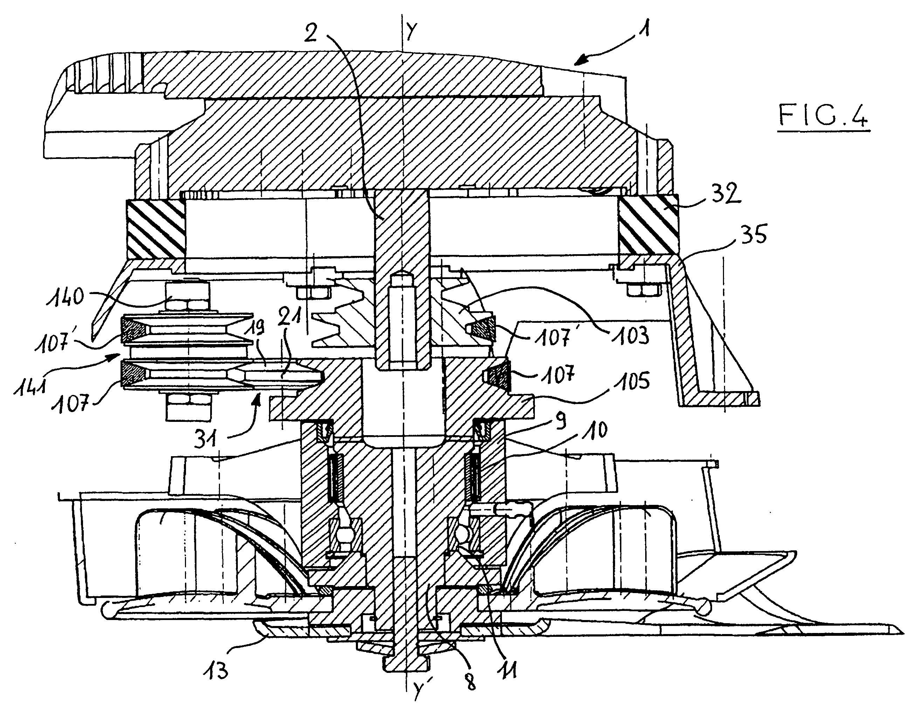

La figure 4 illustre une deuxième variante de réalisation se distinguant de la première en ce qu'elle comprend en outre un mécanisme 31 d'embrayage/débrayage et frein de lame sensiblement identique à celui des figures 1 et 2. La courroie 107 passe dans la gorge 21 du galet tendeur 19 et le patin de frein vient porter sur la poulie 105 lorsque le mécanisme est en position débrayage.

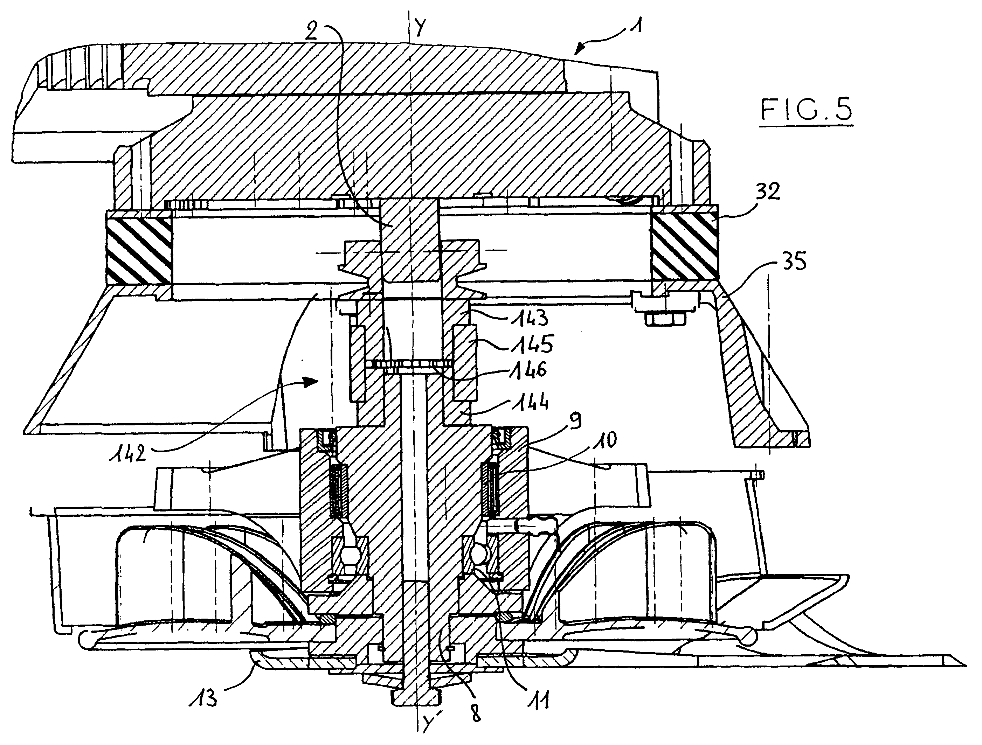

La figure 5 illustre une troisième variante de réalisation. De même que précédemment, les éléments inchangés par rapport à la réalisation illustrée aux figures 1 et 2 portent, à la figure 5, un repère inchangé, tandis que les éléments modifiés portent un repère augmenté de 100.

Cette troisième variante se distingue essentiellement de la réalisation illustrée aux figures 1 et 2 en ce que les demi-poulies 103 et 105, le galet tendeur 19 et la courroie 7 ont été remplacés par un joint de transmission élastique sensiblement cylindrique 142 classique. Ce joint de transmission 142 comprend un premier élément male 143 fixé à l'axe 2, un deuxième élément male 144 fixé au moyeu 8 et un manchon cylindrique en caoutchouc 145, de forme tubulaire. Les éléments males 143 et 144 présentent chacun des cannelures ou équivalent s'insérant dans des cannelures 146 complémentaires ménagées dans le manchon 145.

Ce joint de transmission élastique 142 permet au moteur 1 de se déplacer par rapport à la plaque support 35 en déformant le bloc élastomère 32 tout en transmettant son mouvement de rotation à la lame de coupe 13 sans les vibrations, ou du moins avec des vibrations atténuées.

Cette troisième variante est dépourvue de mécanisme d'embrayage/débrayage et frein de lame tel que celui repéré 31 à la figure 1.

Bien entendu, l'invention n'est nullement limitée aux dessins qui ont été décrits à titre d'exemple non limitatif. Ainsi, on pourrait prévoir pour rendre débrayable la lame de coupe dans la première variante, à la place de la solution proposée par la deuxième variante, de déplacer le galet double 141. Toutefois, compte tenu des disparités de longueur des courroies, ceci nécessite d'appairer les courroies, faute de quoi l'une risque de patiner en permanence.

## Revendications

1. Tondeuse à moteur à gazon équipée d'un dispositif d'entraînement en rotation de la lame de coupe comprenant :
- un élément moteur (3, 103, 143) solidaire en rotation de l'arbre de sortie (2) du moteur et pivotant suivant un premier axe de rotation (yy'),
- des moyens de liaison (32, 34) pour maintenir le moteur par rapport au châssis porteur (9, 33, 35) de la tondeuse,
- un élément récepteur (5, 105, 144) solidaire en rotation de la lame de coupe (13) de la tondeuse,
- des moyens de guidage (10, 11) en rotation pour faire tourner l'élément récepteur suivant un deuxième axe de rotation sensiblement coaxial au premier,
- des moyens d'accouplement élastique (7 ; 107, 107'; 145) entre l'élément moteur (3, 103, 143) et l'élément récepteur (5, 105, 144),
**caractérisée en ce que** :
- les moyens de liaison maintenant le moteur par rapport au châssis porteur comprennent un élément élastique (32), de sorte que le moteur soit fixé flottant sur le châssis porteur, et
- les moyens de guidage en rotation lient mécaniquement l'élément récepteur (5, 105, 144) au châssis porteur, de telle sorte que l'élément récepteur ne soit pas porté par l'arbre de sortie du moteur.

2. Tondeuse selon la revendication 1, **caractérisée en ce que** :
- l'élément moteur comprend une première demi-poulie (3) montée solidaire en rotation de l'arbre de sortie (2) du moteur,
- l'élément récepteur comprend une deuxième demi-poulie (5) juxtaposée à la première, lui faisant face et formant avec elle un profil usuel de poulie (6),
- les moyens d'accouplement élastique comprennent un galet (19) et une courroie d'entraînement (7) à profil conjugué de celui de ladite poulie (6) constituée par les deux demi-poulies juxtaposées (3, 5), ladite courroie d'entraînement (7) étant montée dans la gorge de ladite poulie (6) et sur le galet (19).

3. Tondeuse selon la revendication 2, **caractérisée en ce qu'**elle comprend en outre un mécanisme (31) pour déplacer le galet (19), afin de tendre ou non la courroie d'entraînement (7), de sorte que le galet définissant un galet tendeur permette de débrayer/d'embrayer la courroie d'entraînement, ladite courroie d'entraînement définissant une courroie d'embrayage.

4. Tondeuse selon la revendication 1, **caractérisée en ce que** :
- l'élément moteur comprend une première poulie (103) présentant une gorge (136),
- l'élément récepteur comprend une deuxième poulie (105) présentant une gorge (138),
- les moyens d'accouplement comprennent :
• un galet double (141) présentant une première (137) et une deuxième gorges (139),
• une première courroie d'entraînement (107') à profil conjugué de celui de la première poulie et de la première gorge du galet double, la première courroie d'entraînement étant montée dans la gorge (136) de la première poulie (103) et dans la première gorge (137) du galet double (141),
• une deuxième courroie d'entraînement (107) à profil conjugué de celui de la deuxième poulie et de la deuxième gorge du galet double, la deuxième courroie d'entraînement étant montée dans la gorge (138) de la deuxième poulie (105) et dans la deuxième gorge (139) du galet double (141).

5. Tondeuse selon la revendication 4, **caractérisée en ce qu'**elle comprend en outre un galet tendeur (19) et un mécanisme (31) pour déplacer ledit galet tendeur afin de tendre ou non une (7, 107) et une seule desdites première et deuxième courroie définissant une courroie d'embrayage, de sorte que le galet permette de débrayer/d'embrayer ladite courroie d'embrayage.

6. Tondeuse selon la revendication 3 ou la revendication 5, **caractérisée en ce que** ledit galet tendeur (19) est monté sur une pièce (23) coudée articulée vers son milieu (24) et portant à une de ses extrémités l'axe de rotation (21) du galet tendeur (19), cette pièce coudée pouvant être commandée en rapprochement et en éloignement des éléments moteur et récepteur (3, 5) pour l'embrayage et le débrayage de la courroie d'embrayage (7, 107), et ladite pièce coudée portant sur son bras (23a) entre son point d'articulation (24) et l'axe de rotation (21) du galet tendeur, un patin de frein (30) qui vient freiner contre l'élément récepteur (5, 105) en position de débrayage dudit mécanisme (31) et qui en est éloigné en position d'embrayage.

7. Tondeuse selon la revendication 6, **caractérisée en ce que** ladite pièce coudée (23) est commandée, à son extrémité opposée (25) à celle portant ledit galet tendeur (19), par un câble ou analogue (23) agissant à l'encontre d'un ressort de rappel (28) assurant le débrayage lorsque le câble est relâché et simultanément le freinage de l'élément récepteur (5, 105) et l'arrêt de la lame (13).

8. Tondeuse selon la revendication 1, **caractérisée en ce que** :
- les moyens d'accouplement élastique comprennent un joint de transmission élastique (145),
- l'élément moteur comprend des moyens de liaison (143) entre l'arbre de sortie (2) du moteur et le joint de transmission élastique,
- l'élément récepteur comprend un moyeu (8) et des moyens de liaison (144) entre le joint de transmission élastique et ledit moyeu.

9. Tondeuse selon l'une quelconque des revendications précédentes, **caractérisée en ce que** l'élément récepteur comprend un moyeu (8) et les moyens de guidage en rotation comprennent des roulements (10, 11) montés d'une part sur le châssis porteur (9) de la tondeuse et d'autre part sur ledit moyeu (8).

10. Tondeuse selon l'une quelconque des revendications précédentes, **caractérisée en ce que** l'élément élastique interposé entre le moteur et le châssis porteur est un silentbloc (32).

## Claims

1. Motorised lawn mower provided with a device for driving the cutting blade in rotation, comprising:
- a motor element (3, 103, 143) which is fixedly connected in terms of rotation to the output shaft (2) of the motor and which rotates along a first axis (yy') of rotation,
- connection means (32, 34) for retaining the motor relative to the carrying chassis (9, 33, 35) of the lawn mower,
- a receiving element (5, 105, 144) which is fixedly connected in terms of rotation to the cutting blade (13) of the lawn mower,
- means (10, 11) for guiding in rotation in order to rotate the receiving element along a second axis of rotation which is substantially coaxial with the first axis of rotation,
- resilient coupling means (7; 107, 107'; 145) between the motor element (3, 103, 143) and the receiving element (5, 105, 144),
**characterised in that**:
- the connection means which retain the motor relative to the carrying chassis comprise a resilient element (32) so that the motor is fixed so as to be suspended on the carrying chassis, and
- the means for guiding in rotation mechanically connect the receiving element (5, 105, 144) to the carrying chassis so that the receiving element is not carried by the output shaft of the motor.

2. Lawn mower according to claim 1, **characterised in that**:
- the motor element comprises a first half-pulley (3) which is mounted so as to be fixedly connected in terms of rotation to the output shaft (2) of the motor,
- the receiving element comprises a second half-pulley (5) which is juxtaposed relative to the first, being opposite thereto and forming a normal profile of a pulley (6) therewith,
- the resilient coupling means comprise a roller (19) and a driving belt (7) having a profile which corresponds to that of the pulley (6) which is constituted by the two juxtaposed half-pulleys (3, 5), the driving belt (7) being mounted in the groove of the pulley (6) and on the roller (19).

3. Lawn mower according to claim 2, **characterised in that** it further comprises a mechanism (31) for displacing the roller (19) in order to tension or not to tension the driving belt (7), so that the roller which defines a tensioning roller allows the driving belt to be disengaged/engaged, the driving belt defining an engaging belt.

4. Lawn mower according to claim 1, **characterised in that**:
- the motor element comprises a first pulley (103) having a groove (136),
- the receiving element comprises a second pulley (105) having a groove (138),
- the coupling means comprise:
. a double roller (141) which has a first groove (137) and a second groove (139),
. a first driving belt (107') having a profile which corresponds to that of the first pulley and that of the first groove of the double roller, the first driving belt being mounted in the groove (136) of the first pulley (103) and in the first groove (137) of the double roller (141),
. a second driving belt (107) having a profile which corresponds to that of the second pulley and that of the second groove of the double roller, the second driving belt being mounted in the groove (138) of the second pulley (105) and in the second groove (139) of the double roller (141).

5. Lawn mower according to claim 4, **characterised in that** it further comprises a tensioning roller (19) and a mechanism (31) for displacing the tensioning roller in order to tension or not to tension one and only one of the first and second belts (7, 107) which define an engaging belt, so that the roller allows the engaging belt to be disengaged/engaged.

6. Lawn mower according to claim 3 or claim 5, **characterised in that** the tensioning roller (19) is mounted on a bent piece (23) which is articulated towards the centre (24) thereof and which carries, at one of the ends thereof, the axis of rotation (21) of the tensioning roller (19), this bent piece being able to be controlled by the motor and receiving elements (3, 5) being moved together and apart in order to engage and disengage the engaging belt (7, 107), and the bent piece carrying, on the arm (23a) thereof, between the articulation point (24) thereof and the axis of rotation (21) of the tensioning roller, a brake shoe (30) which acts in a braking manner against the receiving element (5, 105) in the disengaging position of the mechanism (31) and which is moved away therefrom in the engaging position.

7. Lawn mower according to claim 6, **characterised in that** the bent piece (23) is controlled, at the opposite end (25) thereof to that which carries the tensioning roller (19), by a cable (23) or the like which acts counter to a return spring (28) which ensures disengagement when the cable is released and, at the same time, the braking of the receiving element (5, 105) and the stopping of the blade (13).

8. Lawn mower according to claim 1, **characterised in that**:
- the resilient coupling means comprise a resilient transmission joint (145),
- the motor element comprises connection means (143) between the output shaft (2) of the motor and the resilient transmission joint,
- the receiving element comprises a hub (8) and connection means (144) between the resilient transmission joint and the hub.

9. Lawn mower according to any one of the preceding claims, **characterised in that** the receiving element comprises a hub (8) and the means for guiding in rotation comprise bearings (10, 11) which are mounted, at one side, on the carrying chassis (9) of the lawn mower and, at the other side, on the hub (8).

10. Lawn mower according to any one of the preceding claims, **characterised in that** the resilient element which is interposed between the motor and the carrying chassis is a Silentbloc® (32).

## Patentansprüche

1. Motorrasenmäher mit Drehantriebsvorrichtung für ein Schneidmesser, bestehend aus:
- einem Antriebselement (3, 103, 143), das drehfest mit der Ausgangswelle (2) des Motors verbunden ist und sich um eine erste Drehachse dreht (yy');
- Verbindungsmitteln (32, 34) um den Motor an dem Traggehäuse (9, 33, 35) des Mähers zu halten,
- einem Aufnahmeelement (5, 105, 144), das drehfest mit dem Schneidmesser (13) des Mähers verbunden ist,
- Drehführungsmitteln (10, 11), um das Aufnahmeelement entsprechend einer zweiten Drehachse drehen zu lassen, die im Wesentlichen koaxial zu der ersten liegt,
- elastischen Kupplungsmitteln (7, 107, 107', 145) zwischen dem Antriebselement (3, 103, 143) und dem Aufnahmeelement (5, 105, 144),
**dadurch gekennzeichnet, dass**:
- die Verbindungsmittel, die den Motor am Traggehäuse halten ein elastisches Element (32) aufweisen, so dass der Motor schwebend auf dem Traggehäuse befestigt ist, und
- die Drehführungsmittel das Aufnahmeelement (5, 105, 144) mechanisch derart mit dem Traggehäuse verbinden, dass das Aufnahmeelement nicht von der Ausgangswelle des Motors getragen wird.

2. Mäher nach Anspruch 1, **dadurch gekennzeichnet:**
- **dass** das Antriebselement eine erste halbe Anntriebsscheibe (3) besitzt, die drehfest an der Ausgangswelle (2) des Motors befestigt ist,
- **dass** das Aufnahmeelement eine zweite halbe Antriebsscheibe (5) besitzt, die neben der ersten liegt, an dieser anliegt und mit dieser ein übliches Antriebsscheibenprofil (6) bildet,
- **dass** die elastischen Kupplungsmittel eine Riemenscheibe (19) und einen Treibriemen (7), mit einem Profil, das dem der Antriebsscheibe (6), die aus den beiden nebeneinander liegenden halben Antriebsscheiben gebildet wird, zugeordnet ist, wobei der Treibriemen (7) in der Ringnut der Antriebsscheibe (6) und auf der Rolle (19) montiert ist.

3. Mäher nach Anspruch 2, **dadurch gekennzeichnet, dass** er außerdem einen Mechanismus (31) zur Verschiebung der Rolle (19) besitzt, um den Treibriemen (7) zu spannen oder nicht, so dass die Rolle, die eine Spannrolle bildet, es erlaubt, den Treibriemen auszukuppeln/einzukuppeln, wodurch der Treibriemen eine Riemenkupplung bildet.

4. Mäher nach Anspruch 1, **dadurch gekennzeichnet, dass**:
- das Antriebselement eine erste Antriebsscheibe (103) besitzt, die eine Ringnut (136) aufweist,
- das Aufnahmeelement eine zweite Antriebsscheibe (105) mit einer Ringnut besitzt
- die Kupplungsmittel aus:
• einer Doppelrolle (141), die eine erste (137) und eine zweite (139) Ringnut aufweist,
• einem ersten Treibriemen (107') mit einem Profil, das dem der ersten Antriebsscheibe und der ersten Ringnut der Doppelrolle zugeordnet ist, wobei der erste Treibriemen in der Ringnut (136) der ersten Antriebsscheibe (103) und der ersten Ringnut (137) der Doppelrolle (141) angeordnet ist,
• einem zweiten Treibriemen (107) mit einem Profil, das dem der zweiten Antriebsscheibe und der zweiten Ringnut der Doppelrolle zugeordnet ist, wobei der zweite Treibriemen in der Ringnut (138) der zweiten Antriebsscheibe (105) und der zweiten Ringnut (139) der Doppelrolle (141) angeordnet ist,
bestehen.

5. Mäher nach Anspruch 4, **dadurch gekennzeichnet, dass** er außerdem eine Spannrolle (19) und einen Mechanismus (31) zur Verschiebung der Spannrolle besitzt, um den ersten oder den zweiten Treibriemen zu spannen oder nicht und eine Riemenkupplung bildet, so dass die Rolle es erlaubt, die Riemenkupplung aus- oder einzukuppeln.

6. Mäher nach Anspruch 3 oder Anspruch 5, **dadurch gekennzeichnet, dass** die Spannrolle (19)auf einem abgewinkelten Teil (23) angeordnet ist, das an ihrer Mitte (24) angelenkt ist und an einem seiner Enden die Drehachse (21) der Spannrolle (19) trägt, wobei das abgewinkelte Teil durch Annäherung und Entfernen zwischen dem Antriebselement und der Aufnahme (3, 5) gesteuert werden kann, um den Treibriemen einoder auszukuppeln, und dass das abgewinkelte Teil auf seinem Arm (23a) zwischen seinem Anlenkpunkt (24) und der Drehachse (21) der Spannrolle einen Bremsklotz (30) trägt, der im entkoppelten Zustand des Mechanismus (31) das Aufnahmeelement (5, 105) bremst und im eingekuppelten Zustand ausgerückt ist.

7. Mäher nach Anspruch 6, **dadurch gekennzeichnet, dass** das abgewinkelte Teil (23) an dem Ende (25), das dem entgegengesetzt ist, das die Spannrolle (19) trägt, von einem Seilzug oder dergleichen (23), der gegen eine Rückholfeder (28) wirkt, betätigt wird und der das Auskuppeln sicherstellt, solange der Seilzug und gleichzeitig die Bremsung des Aufnahmeteils (5, 105) und die Sperrung des Schneimessers gelöst sind.

8. Mäher nach Anspruch 1, **dadurch gekennzeichnet, dass**:
- die elastischen Kupplungsmittel ein elastisches Antriebsgelenk (145) aufweisen,
- das Antriebselement Verbindungsmittel (143) zwischen der Ausgangswelle (2) des Motors und dem elastischen Antriebsgelenk besetzt,
- das Aufnahmeelement eine Nabe (8) und Verbindungsmittel (144) zwischen dem elastischen Verbindungsgelenk und der Nabe besitzt.

9. Mäher nach einem der vorhergehenden Ansprüche, **dadurch gekennzeichnet, dass** das Aufnahmeelement eine Nabe (8) und Drehführungsmittel besitzt, die aus Wälzlagern (10, 11) bestehen, die einerseits an dem Traggehäuse (9) des Mähers und andererseits an der Nabe angeordnet sind.

10. Mäher nach einem der vorhergehenden Ansprüche **dadurch gekennzeichnet, dass** das elastische Element, das zwischen dem Motor und dem Traggehäuse angeordnet ist, ein Silentblock (32) ist.
